Europäisches Patentamt

European Patent Office

Office européen des brevets

(19)

(11) Publication number: **0 360 353**
**A2**

(12) **EUROPEAN PATENT APPLICATION**

(21) Application number: **89202370.6**

(22) Date of filing: **20.09.89**

(51) Int. Cl.⁵: **B23B 27/18**

(30) Priority: **23.09.88 IT 2205788**

(43) Date of publication of application:
**28.03.90 Bulletin 90/13**

(84) Designated Contracting States:
**AT BE CH DE ES FR GB GR LI LU NL SE**

(71) Applicant: **LA/ES LAMINATI ESTRUSI TERMOPLASTICI S.P.A.**
**Piazzale Principessa Clotilde 6**
**I-20121 Milan(IT)**

(72) Inventor: **Conterno, Cosimo**
**Via Madonnina 9**
**I-22070 Figliaro Como(IT)**

(74) Representative: **De Carli, Erberto et al**
**ING. BARZANO' & ZANARDO MILANO S.p.A.**
**Via Borgonuovo, 10**
**I-20121 Milano(IT)**

(54) **Plate of material with polymeric structure, resistant to sun light.**

(57) The plate of material with polymeric structure comprises a pair of parallel sheets united by a connection structure. Each sheet of said pair of sheets is co-extruded with at least two superimposed layers of polymeric material containing, dispersed throughout its matrix, a neutralizing agent which neutralizes that range of sun light wavelengths which are harmful for the polymeric structure of the same plate.

EP 0 360 353 A2

## PLATE OF MATERIAL WITH POLYMERIC STRUCTURE, RESISTANT TO SUN LIGHT

The present invention relates to a plate made from a material with polymeric structure, resistant to sun light.

The problem of protection from the sun light of the polymeric structures has been seriously jeopardizing for long years the possibilities of use of finished articles having such a structure in many sectors in the art.

That portion of sun light spectrum which is irradiated with a wavelength comprised within the range of from 290 to 400 mm (substantially corresponding to the U.V. light range) is capable of breaking the bond energy between the molecules of a wide range of polymeric structures, originating photochemical reactions which result in variations in the optical and mechanical properties of the same structures.

This problem is particularly felt in the building sector, in which polycarbonate plates are used for providing the buildings with transparent surfaces, with undoubted advantages deriving from their mechanical strength, light weight, easy transport and installation, and, obviously, transparence.

Among the several polymers, polycarbonate is in particular the most sensitive to sun light with wavelengths comprised within the range of from 250 to 350 mm, with absoption peaks at 295 and 345 mm (substantially corresponding to U.V. light range).

The resulting photochemical reactions cause the gradual degradation of polycarbonate, with its main properties, i.e., mechanical strength and transparence, being impaired.

Such a phenomenon, called "ageing" by those skilled in the art, conditions the applications of polycarbonate sheets in outdoor environments.

In order to overcome the "ageing" problem, which affects the plates made from materials with polymeric structure (or, at least, to slow down such a problem as far as possible), several solutions were proposed in the past, the most meaningful of which are discussed in the following. All of them share the use of neutralizing agents for neutralizing the harmful radiations.

A first solution, adopted in most cases thanks to its relative ease of applications, substantially resorts to the addition to the polymeric structure (in the present case, polycarbonate) elements which are capable of neutralizing the action of the harmful radiations (substantially U.V. light), dispersed throughout the matrix of the same plate.

According to a second, less adopted, solution, on either of the external surfaces of the plate a film of protective material is applied, which is obtained both by spraying and by direct deposition.

The first solution can be accomplished either using substances (denominayed "U.V.-absorbers") which filter U.V. light, or which are capable of "capturing" the free radicals (radical scavengers), or also with products (quenchers) which are capable of deactivating the molecule which absorbed energy, by means of a transfer process.

Such a solution does not show any particular drawbacks when one single neutralizing agent is sufficient in order to cover the whole range of harmful wavelengths for the particular polymeric structure taken into consideration.

On the contrary, when a plurality of neutralizing agents are necessary in order to cover the whole range of harmful wavelengths (as it occurs in particular in case of polycarbonate), to the polymeric structure a plurality of neutralizing agents have to be added; as a consequence, problems of incompatibility between the same neutralizing agents can arise.

Such an incompatibility results in the formation of crystals in the polymeric structure, with the consequent decay of the mechanical characteristics thereof.

The second solution, resorting either to spreading on either of the external surfaces of the plate a film of a protective material (e.g., poly(methyl methacrylate), commonly known as "PMMA"), or to painting said surface with a layer of an acrylic polymer, is more expensive than the first one, and results also in a decay of the mechanical characteristics of the treated plate, which becomes brittler.

Therefore, according to the prior state of the art, manufacturing a plate, in particular of polycarbonate, requires a full series of compromise selections, with the relevant decisions being made as a function of the inteded use the plate is destined to, because, summing up:

- a real protection of the plate over the whole range of harmful wavelengths cannot be secured, owing to the incompatibility existing between the neutralizing agents which should be used jointly, dispersed throughout the polymeric matrix;

- one cannot even think of superimposing to, in combination with, one another, one or more thin, protective layers, each constituted by a neutralizing agent, without such an arrangement leading once again to the arising of problems of compatibility and of concentration limit.

Furthermore, in the particular case of the polycarbonate plate, during the extrusion thereof, owing to the effect of the depressure existing inside the gauging tool, the migration (evaporation) is observed of the components of the same plate and, in particular, of the neutralizing agent.

Such an evaporation tends to deprive the plate of the neutralizing agent precisely there, where its highest concentration is required, and furthermore results in a considerable increase in costs, due to the waste of a particularly expensive material.

The purpose of the present invention is of providing a plate capable of obviating the above said drawbacks.

Such a purpose is achieved by a plate of material with polymeric structure formed by at least a first sheet and a second sheet parallel to each other and united by a connection structure, characterized in that each sheet is co-extruded with at least two superimposed layers of polymeric material with each one of said superimposed layers containing, dispersed throughout its matrix, a neutralizing agent which neutralizes that range of sun light wavelengths which are harmful for the polymeric structure of the same plate.

The arrangement of the neutralizing agents inside co- extruded, physically united, by chemically not interacting, layers makes it possible a plurality of neutralizing agents to be used for manufacturing a same plate, even if they are not chemically compatible with one another, with the result that the problems which would derive by their mixing before the plate is extruded, are obviated.

It was observed in fact that the possible mixing, at co-extrusion time, of the neutralizing agents in the region of adhesion of two co-extruded layers (with such a mixing occurring owing to the "volatility" of the neutralizing agents inside the interior of the polymeric matrix of the still hot plate and immediately after the extrusion) does not cause any longer any problems of chemical compatibility, as observed in the traditional plates owing to the presence of microcrystals, as it on the contrary would happen is the mixing was made before the co-extrusion.

The plate according to the invention makes it furthermore possible the above said superimposed layers to be arranged according to the order which is regarded as the most suitable for limiting the volatilization of the neutralizing agents: neutralizing agents having a higher molecular weight are charged to the outermost layers, neutralizing agents with a lower molecular weight are charged to the innermost layers

The waste of neutralizing agents due to their volatilization is therefore minimized with evident economic advantages, owing to the high cost of the neutralizing agents as compared to the polymer.

The present Applicant was furthermore able to observe that by arranging the neutralizing agents in mutually parallel and superimposed layers a synergism is obtained in the protection action.

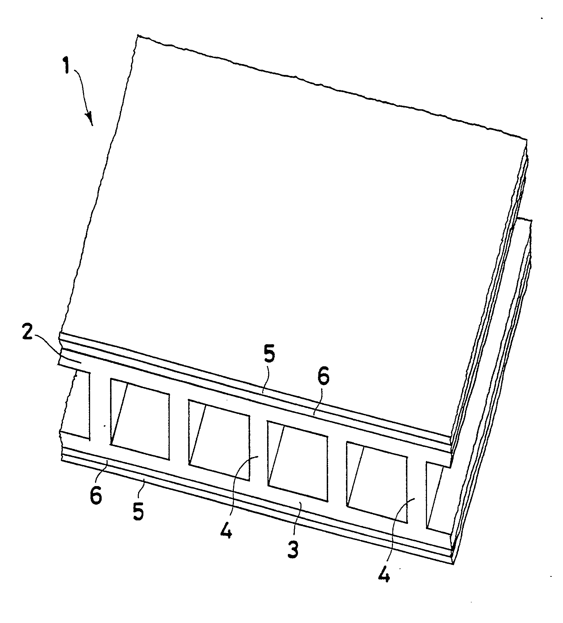

The present invention is illustrated for merely exemplifying, non-limitative, purposes, in the figure of the single drawing table attached to the instant disclosure, which shows a partial, sectional view of a plate according to the present invention.

Referring to the above-said Figure, the polymeric plate according to the present invention, generally indicated by the reference numeral 1, is made by means of the extrusion of at least one polymeric material, such as, e.g., polycarbonate.

The plate 1 is formed by a first sheet 2, a second sheet 3, parallel and united to each other by means of a connection structure comprising a set of walls 4, e.g., perpendicular to both sheets 2 and 3. Both the first sheet 2 and the second sheet 3 are co-extruded with at least two layers of polymeric material 5 and 6, e.g., of polycarbonate, with each one of said layers comprising at least one neutralizing agent which neutralizes the sun light wavelengths harmful for the polymeric structure of the plate.

The neutralizing agent is anyway one, and one only, in case it is chemically incompatible with the remainder neutralizing agents used in order to protect the plate; on the contrary, one single layer may contain a plurality of neutralizing agents.

In case of polycarbonate, the harmful sun light wavelengths, which speed up its decay are those belonging to U.V. range and, consequently, the neutralizing agents are selected consequently.

For instance, it may be also necessary to select a plurality of neutralizing agents in order to cover a whole range of harmful radiations, with the adjacent ranges possibly overlapping each other.

Extremely good neutralizing agents for U.V. light resulted to be those belonging to the family of benzotriazoles and of benzophenones which, by operating as pair of substances, cover the whole range of U.V. light wavelengths and furthermore originate a synergistic protective effect.

The well-known volatility of said agents can be limited of course by arranging the neutralizing agent belonging to benzotriazole family in the layers 5 which are the farthest away from the sheets 2 and 3, with the neutralizing agent belonging to the family of benzophenones being arranged in the layers 6, i.e., the closest one to sheets 2 and 3.

The criterion in the arrangement takes into consideration the molecular weights of the neutralizing agents: a higher molecular weight results in a lower volatility, hence the agent will be added to an outermost layer; a lower molecular weight results in a higher volatility, with the agent being hence arreanged in an innermost layer.

Still for the purpose of obviating the problem of evaporation due to the volatility of the elements, the percentage of each individual neutralizing agent is substantially a reverse function of the thickness of the layer which contains it.

In fact, the thinner the layer, the shorter the distance each individual molecule of neutralizing agent has to travel through in order to leave the polymeric matrix.

The phenomenon of evaporation of the neutralizing agents reaches its maximum during and after the extrusion, until the plate has cooled, reaching room temperature.

Therefore, accelerating the cooling of the plate by means of artificial contrivances may prove useful; e.g., by blowing cool air onto the plate portions at the time of leaving the extrusion head.

The present Applicant was anyway able to observe that if after the extrusion the neutralizing agent of a layer penetrates, owing to the phenomenon of volatilization, the adjacent layers, getting mixed with the neutralizing agents contained inside these latter, those negative effects are not observed, which would result in case the mixing was made before the extrusion step, i.e., no microcrystals -- which would weaken the mechanical structure of the plate -- are formed.

For example, the layers 5 of the plate 1 can contain a neutralizing agent of the type of 2-hydroxy-3,5-di-dimethyl-benzyl-phenylbenzothiazole (molecular weight 447) in percentages comprised within the range of from 0.2% to 2% (1.2% is the optimum concentration value for a thickness of layer 5 of about 20 microns). The layers 6 of the plate may contain 2-hydroxy-4-dimethoxybenzophenone (molecular weight 274), or 2-hydroxy-4-N-octoxy-benzophenone (molecular weight 326) at use percentages which may be comprised within the range of from 0.2 to 2% (1.5% is the optimum concentration value for a thickness of layer 6 of about 20 microns).

In case, on the contrary, one also wishes to introduce a differentiated action between the same layers, so that, e.g., the layer 5 absorbs a certain range of wavelengths in the U.V. region and the layer 6 integrates this absorption by means of the use of a neutralizing agent which neutralizes the U.V. light by acting on a wider range of wavelengths, also making due allowance for the problem of volatility of the same agents, the composition can be the following: the outermost layer 5 contains 2-hydroxy-3,5-di-dimethylbenzyl-phenyl-benzotriazole in percentages comprised within the range of from 0.2 to 2%; the innermost layer 6 will contain 2,4-di-hydroxy-benzophenone at percentages comprised within the range of from 0.2 to 2%.

The neutralizing agent of the layer 5 is particularly active towards the light having wavelengths comprised within the range of from 310 to 360 mm, and the neutralizing agent of the layer 6 is particularly active towards the light having a wavelength comprised within the range of from 290 to 340 mm.

## Claims

1. Plate of material with polymeric structure formed by at least a first sheet and a second sheet parallel to each other and united by a connection structure, characterized in that each sheet is co-extruded with at least two superimposed layers of polymeric material with each one of said superimposed layers containing, dispersed throughout its matrix, a neutralizing agent which neutralizes that range of sun light wavelengths which are harmful for the polymeric structure of the same plate.

2. Plate according to claim 1, wherein the neutralizing agent is one and one only when it is chemically incompatible with the neutralizing agent(s) contained in the other layers.

3. Plate according to claim 2, wherein the co-extruded layers of each sheet are superimposed to one another as a function of the volatility of the neutralizing agent which they contain, with the layers which contain the most volatile neutralizing agent being positioned close to the relevant sheet, and the layers which contain the less volatile neutralizing agent being positioned farther away from the relevant sheet.

4. Plate according to claim 3, wherein each layer contains the neutralizing agent in a percentage which is a reverse function of the thickness of the layer of polymeric material which contains it.

5. Plate according to claim 4, wherein to the co-extruded layers neutralizing agents are added in such percentages that each individual co-extruded layer performs a differentiated neutralizing action, i.e., performs a neutralizing action for a range of sun light wavelengths which are different from the range of sun light wavelengths against which the neutralizing agents contained in the remainder layers are operative, with the possible overlapping of portions of adjacent wavelength ranges.

6. Plate according to claim 5, wherein the neutralizing agents protect the polymeric structure from U.V. light, and the polymeric structure is polycarbonate.

7. Plate according to claim 6, wherein the farthest layer away from the sheet contains neutralizing agents belonging to the family of benzotriazoles, and the closest layer to the sheet contains neutralizing agents belonging to the family of benzophenones.

8. Plate according to claim 7, wherein the farthest layer away from the sheet contains a neutralizing agent formed by 2-hydroxy-3,5-di-dimethyl-benzyl-phenylbenzothiazole (molecular weight 447) in percentages comprised within the range of from 0.2% to 2%, and the closest layer to the sheet contains 2-hydroxy-4-dimethoxy-benzophenone (molecular weight 274), in percentages comprised within the range of from 0.2 to 2%.

9. Plate according to claim 8, wherein the closest layer to the sheet contains 2-hydroxy-4-N-octoxy-benzophenone (molecular weight 326), in percentages comprised within the range of from 0.2 to 2%.

10. Plate according to claim 7, wherein the farthest layer away from the sheet contains 2-hydroxy-3,5-dimethyl-benzyl-phenyl-benzotriazole and the closest layer to the sheet contains 2,4-di-hydroxy-benzophenone.

11. Plate according to one or more of the preceding claims, characterized in that it is artificially cooled while it is leaving the gauging tool which fabricates it by co-extrusion.